Europäisches Patentamt

European Patent Office

Office européen des brevets

(19)

(11) Veröffentlichungsnummer : **0 077 509**
**B1**

(12) # EUROPÄISCHE PATENTSCHRIFT

(45) Veröffentlichungstag der Patentschrift :
25.03.87

(51) Int. Cl.⁴ : **B 01 D 13/04**

(21) Anmeldenummer : 82109360.6

(22) Anmeldetag : 09.10.82

(54) **Semipermeable Membranen.**

(30) Priorität : 21.10.81 DE 3141672

(43) Veröffentlichungstag der Anmeldung :
27.04.83 Patentblatt 83/17

(45) Bekanntmachung des Hinweises auf die Patenterteilung : 25.03.87 Patentblatt 87/13

(84) Benannte Vertragsstaaten :
CH DE FR GB IT LI NL

(56) Entgegenhaltungen :
AU-B- 224 035
DE-A- 2 129 014
DE-A- 2 140 310
DE-A- 2 362 036
US-A- 3 567 666
US-A- 4 237 083
Die Akte enthält technische Angaben, die nach dem
Eingang der Anmeldung eingereicht wurden und die
nicht in dieser Patentschrift enthalten sind.

(73) Patentinhaber : BAYER AG
Konzernverwaltung RP Patentabteilung
D-5090 Leverkusen 1 Bayerwerk (DE)

(72) Erfinder : Ritter, Helmut, Dr.
Bodelschwinghstrasse 16
D-4150 Krefeld (DE)
Erfinder : Lahrs, Jürgen, Dr.
Volberger Weg 11
D-5000 Köln 91 (DE)
Erfinder : Hildebrand, Karlheinz, Dr.
Bodelschwinghstrasse 12
D-4150 Krefeld (DE)
Erfinder : Nielinger, Werner, Dr.
Bärenstrasse 21
D-4150 Krefeld (DE)

EP 0 077 509 B1

**Beschreibung**

Die Erfindung betrifft neue semipermeable Membranen und ihre Verwendung bei Umkehrosmose und Ultrafiltration.

Umkehrosmose und Ultrafiltration sind Verfahren zur Stofftrennung. Die Stofftrennung erfolgt bei diesen Trennprozessen in der Weise, daß die zu trennende Lösung unter Druck über die Oberfläche einer semipermeablen Membran geleitet wird, wobei das Lösungsmittel und eventuell ein Teil der gelösten Stoffe durch die Membran dringen, während die übrigen Komponenten der Lösung an der Oberfläche der Membran zurückgehalten und in der Lösung angereichert werden.

Die Trennung gelöster Substanzen vom Lösungsmittel durch Druckfiltration, z. B. die Abtrennung von Salzen aus Meer- oder Brackwasser zur Gewinnung von Süßwasser oder die Abtrennung bestimmter Inhaltsstoffe aus Prozeßwässern und Produktionsabläufen oder die Entfernung unerwünschter Stoffe aus Abwässern, ist ein Verfahren, das zunehmend an Bedeutung gewinnt.

Eine technische Bedeutung haben bisher hauptsächlich Membranen aus Celluloseestern insbesondere Celluloseacetat, bzw. aus Polyamiden und Polysulfonen erlangt. Celluloseacetatmembranen finden wegen ihrer guten Durchflußleistung und ihres hohen Trennvermögens technische Anwendung, obwohl sie eine Reihe nachteiliger Eigenschaften ausweisen, die ihre allgemeine Verwendbarkeit einschränken. Es sind dies einmal mangelnde Chemikalienbeständigkeit, insbesondere auch die Hydrolyseempfindlichkeit bei hohem oder niedrigem pH-Wert sowie die Anfälligkeit gegenüber einem Abbau durch Mikroorganismen. Dies führt im Laufe der Zeit zu einer Verschlechterung der Membraneigenschaften. Außerdem verdichten und schrumpfen diese Membranen beim Trocknen.

Asymmetrische Membranen werden vorzugsweise nach einem von Loeb und Sourirajan (Adv. Chem. Ser. 117 (1963)) entwickelten, als Phaseninversion bezeichneten Verfahren hergestellt. Dabei wird im allgemeinen ein Polymer in einem geeigneten organischen Lösungsmittel gelöst und zu einem Film gegossen, der in einem Nicht-Lösungsmittel gefällt wird.

Dabei wurde bereits versucht, das Schrumpfen beim Trocknen der Celluloseacetatmembranen durch Zugabe von hydrophobierten Kieselsäuren in die Gießlösung zu verbessern (DE-A-2 816 085). Nachteilig dabei ist jedoch der starke Viskositätsanstieg der Gießlösung, wodurch die Membranherstellung erschwert wird. Weiterhin zeigen diese Membranen auch keine verbesserte Durchflußraten und keine erhöhte Druckbelastbarkeit.

Es wurden auch Membranen aus verschiedenen aromatischen Polyamiden hergestellt (DE-B-1 949 847) und auf ihre Umkehrosmoseeigenschaften untersucht (T. Matsuura u. a., J. Appl. Polym. Sci. 18 (1974) Nr. 12. S. 3671). Obwohl diese auf Isophthalsäure/Phenylendiamin basierenden Polyamidmembranen eine technische Bedeutung erlangen konnten, besteht nach wie vor für bestimmte Einsatzzwecke die Notwendigkeit, Membranen mit noch besseren Trenneigenschaften bereitzustellen. So wird in erster Linie eine noch höhere Wasserdurchflußrate bei möglichst gleicher Selektivität gefordert.

Von besonderem Interesse sind auch temperaturbeständige Membranen, die beispielsweise für die Sterilfiltration oder zur Reinigung heißer Prozeßgewässer eingesetzt werden können.

Mit den erfindungsgemäßen Membranen gelingt es, asymmetrische Membranen bereitzustellen, die sich besonders durch hohe Durchflußraten bei guter Trennleistung auszeichnen, einer hohen Druckbelastung im Dauerbetrieb widerstehen und beim Trocknen nicht schrumpfen. Daneben gelingt es auch temperaturbeständige Membranen bereitzustellen, die ihre guten Eigenschaften auch nach mehrtägigem Behandeln mit kochendem Wasser beibehalten.

Gegenstand der Erfindung ist eine semipermeable Membran, die aus einer mikroporösen Trägerschicht und einer selektiven, asymetrischen Membranschicht aus einem filmbildenden thermoplastischen Polymeren besteht, wobei die asymmetrische Membranschicht ein fein verteiltes, anorganisches Pigment enthält. Eine solche Membran, die aus der DE-A-2 140 310 bereits bekannt ist, ist dadurch gekennzeichnet, daß die asymmetrische Membranschicht 60-90 Gew.-%, eines fein verteilten anorganischen Pigmentes und/oder Füllstoffes enthält, dessen spezifische Oberfläche im Bereich von 5-50 $m^2$/g liegt.

Als feinteilige Füllstoffe oder Pigmente eignen sich vorzugsweise solche mit einem mittleren Teilchendurchmesser von 0,05-0,5 µm, vorzugsweise 0,2-0,4 µm, wobei die Teilchendurchmesser mit Hilfe elektronenmikroskopischen Auszählmethoden bestimmt werden. Beispielhaft können $TiO_2$, Ruß, Eisenoxid, Aluminiumoxid, Bariumsulfat, Zinkoxid oder Zinksulfid verwendet werden.

Besonders bevorzugt wird $TiO_2$ eingesetzt, das gegebenenfalls mit einem Dispergiermittel wie Trimethylolpropan vor seiner Verwendung behandelt worden ist, oder $TiO_2$ mit mindestens einem weiteren genannten Füllstoff oder Pigment, das bis zu 50 Gew.-% zugemischt werden kann.

Als thermoplastische Polymere zur Herstellung der erfindungsgemäßen Membranen eignen sich besonders filmbildende thermoplastische Polyamide oder Polyimide. Vorzugsweise haben die filmbildenden thermoplastischen Polymeren einen Erweichungspunkt von mindestens 150 °C.

Beispielsweise können aromatische Polyamide aus Phenylendiamin und Isophthalsäure oder Polyamide mit Disulfonimidstrukturen wie sie in der DE-A-2 642 979 beschrieben sind, eingesetzt werden. Ferner können als filmbildende Polymere Polymere aus aromatischen Heterocyclen (DE-A-2 554 922) ; Copolymere aus Acrylnitril und Acrylsäure, Methacrylsäure, Vinylsulfonat, Allylsulfonat oder Disulfimidgruppen enthaltenden Comonomeren (EP-A-0 004 287) ; Polysulfone (EP-A-008 895) ; cyclische Polyharnstoffe wie Polyhydantoine oder Polyparabansäuren verwendet werden.

Besonders geeignet sind Polyamide aus Hexamethylendiamin und einer aromatischen Dicarbonsäure, wie z. B. Terephthalsäure und/oder Isophthalsäure.

Als Polymere für die Herstellung erfindungsgemäßer temperaturbeständigen Membranen eignen sich besonders aromatische Polyamide, aromatische Polyamidimide, Polyimide, Polyhydantoine und Polyparabansäure, die gemäß den DE-A-1 494 443, 1 570 552, 1 720 744, 2 003 398 und 1 770 146 erhalten werden.

Als Polyimide eignen sich vorzugsweise solche aus Trimellithsäure oder Pyromellithsäure und einen aromatischen Diamin oder Diisocyanat.

Während die semipermeablen Membranen aus diesen Thermoplasten üblicher Weise bereits bei geringfügigem Antrocknen irreversibel schrumpfen, zeigen die erfindungsgemäß mit anorganischen Füllstoffen angereicherten Membranen dabei keine Beeinträchtigung ihrer Eigenschaften.

Die erfindungsgemäßen Membranen bestehen aus einem stabilen Trägermaterial als Unterlage und einer dünnen Polymerschicht als selektive, asymmetrische Membranschicht.

Sie werden hergestellt, indem man eine Lösung des Polymeren in einem Lösungsmittel, vorzugsweise Dimethylformamid oder N-Methylpyrrolidon, bei Raumtemperaturen herstellt und darin den anorganischen Füllstoff oder das Pigment durch rasches Rühren dispergiert. Die Konzentration der Polymerlösung beträgt vorzugsweise 10-30 Gew.-%. Zusätzlich können noch etwa 1-10 Gew.-% $CaCl_2$ oder LiCl enthalten sein.

Die Beschichtung des Trägers erfolgt nach bekannten Verfahren durch Aufgießen der Dispersion auf das Vlies, wonach mit einem Rakelmesser Schichtdicken von 50-400 µm, vorzugsweise 80-150 µm eingestellt werden.

Als bekannte Trägermaterialien eignen sich besonders Vlies oder Papiere aus Polyethylen, Polypropylen, Polyester oder Polyamid.

Nach Verdampfen von ca. 1-30 Gew.-% des Lösungsmittels bei Temperaturen zwischen 40 und 100 °C wird die noch feuchte Membran in Wasser gefällt und anschließend in üblicher Weise, z. B. im Glycerinbad, konserviert und getrocknet. Die Membranen können in üblicher Weise durch Wahl der Abdampfrate in der Trennwirkung beeinflußt werden.

Die erfindungsgemäßen asymmetrische Membranen, die sich gegenüber den bisher bekannten Membranen durch höhere Druckbelastbarkeit bei erhöhter Permeabilität, hoher Selektivität und verbesserten Schrumpfverhalten beim Trocknen auszeichnen, können besonders für die Aufarbeitung von Farbstofflösungen oder im Ultrafiltrationsbereich zur Abtrennung oder Aufkonzentrierung von höhermolekularen Stoffen (wie z. B. Latices oder Proteine), verwendet werden.

Mit den erfindungsgemäßen temperaturbeständigen Membranen lassen sich auch heiße, wässrige Lösungen aufarbeiten.

Beispiel 1

Zusammensetzung der Gießlösung :

8,0 g eines Polyamids aus Hexamethylendiamin und Isophthalsäure mit einem $\eta$rel = 2,65, gemessen in m-Kresol bei 25 °C an einer 1 %igen Lösung

44  g Dimethylformamid
46,0 g $TiO_2$-Pigment.

Die Gießlösung wurde auf ein Trägervlies aus Polyethylen mit einer Dicke von 100 µm aufgebracht. Nach etwa 2-minütiger Antrocknung bei verschiedenen Temperaturen wurde der Film im Wasserbad gefällt, danach in ein 30 %iges Glycerinbad getaucht und abschließend bei 50 °C getrocknet. Die Membranprüfung wurde mittels einer Rühr-Druckzelle (Fa. Berghof) bei einem Druck von 50 bar durchgeführt. In Tabelle 1 sind die Testergebnisse zusammengefaßt :

Tabelle 1 : Membrantest (getrocknete Membranen)

| Abdampftemperatur °C | Kongorot (0,5 %) l/m² Tag | Rückhaltevermögen (%) |
|---|---|---|
| 45 | 1 700 | 90 |
| 50 | 1 500 | 95 |
| 60 | 1 400 | 100 |

Vergleichsversuch 1

Zusammensetzung der Gießlösung :

150 g Polyamid (analog Beispiel 1)

50 g CaCl$_2$
800 g Dimethylformamid

Die Membranen wurden entsprechend Beispiel 1 hergestellt. Auf die abschließende Trockung mußte jedoch verzichtet werden, da die Membranen dabei irreversibel zusammenschrumpfen und undurchlässig werden. Ebenso müßte bei der Herstellung eine dickere Schicht (400 µm) auf das Papier aufgetragen werden, da die Polymerlösung zum großen Teil in das Trägerpapier eindringt. In Tabelle 2 sind die Vergleichstests dargestellt.

Tabelle 2 : Vergleichstest A : feuchte Membran, B : getrocknete Membran

|  | Abdampftemperatur °C | Kongorot l/m² Tag | Rückhaltevermögen (%) |
|---|---|---|---|
| (A) | 60 | 1 500 | 30 |
|  | 90 | 1 200 | 80 |
|  | 100 | 600 | 90 |
| (B) | 80 | — | — |

Wie aus Tabelle 2 hervorgeht, kann eine feuchte gelagerte Membran schlechter Qualität ohne TiO$_2$ erhalten werden, die jedoch bereits bei geringem Antrocknen völlig unbrauchbar wird.

Beispiel 2

Es wurde ein aromatisches Co-Polyamid aus 3-(p-Aminophenyl)-7-amino-2,4-(1H,3H)-chinazolindion, 3,3'-Diaminodiphenyl-disulfimid und Isophthalsäure hergestellt (vgl. DE-A-2 642 979) und zu folgender Gießlösung verarbeitet :

10 g Copolyamid
4 g CaCl$_2$
55 g Dimethylformamid
31 g TiO$_2$-Pigment

Die Membran wurde analog Beispiel 1 hergestellt und untersucht.

Tabelle 3

| Abdampftemperatur °C | Wasser l/m² Tag | Kongorot (0,5 %) l/m² Tag | Rückhaltevermögen (%) |
|---|---|---|---|
| 50 | 40 000 | 2 500 | 80 |
| 80 | 15 000 | 1 700 | 100 |

Die entsprechend feuchte Membran ohne TiO$_2$-Anteil zeigt bei ähnlicher Selektivität eine niedrigere Durchflußrate von 2 000 l/m² Tag (Wasser und 1 500 l/m² Tag (Kongorot).

Beispiel 3

Es wurde ein aromatisches Polyamidimid aus 3-(p-Aminophenyl)-7-amino-2,4-(1H,3H)-chinazolindion und Isophthalsäure hergestellt und zu folgender Gießlösung verarbeitet :

15 g Polyamidimid
4 g CaCl$_2$
80 g Dimethylformamid
85 g TiO$_2$

Die Herstellung der Membran erfolgte entsprechend Beispiel 1 mit einer Dicke von 100 µm. Vor dem Test wurden die Membranen jeweils an der Luft getrocknet.

Die so erhaltenen Membranen konnten mehrere Tage mit kochendem Wasser behandelt werden, ohne daß ihre guten Eigenschaften verlorgen gingen.

Die unter identischen Bedingungen hergestellten Membranen ohne TiO$_2$ zeigten eine niedrigere Durchflußrate bei verschlechterter Selektivität.

In Tabelle 4 sind die entsprechenden Werte gegenübergestellt.

Tabelle 4

| Abdampftemperatur | Wasser | Kongorot (0,5 %) | Rückhaltevermögen |
|---|---|---|---|
| °C | l/m² Tag | l/m² Tag | (%) |
| 50 (mit TiO₂) | 40 000 | 1 800 | 100 |
| nach T-Behandlung (6 h, 100 °C) | 38 000 | 1 800 | 100 |
| 50 | 20 000 | 1 400 | 60 |

Beispiel 4

Aus dem aromatischen Polyamid aus m-Phenylendiamin und Isophthalsäuredichlorid wurden ebenfalls temperaturstabile Membranen hergestellt.

Die Herstellung der Gießlösung und der Membran erfolgte in Analogie zu Beispiel 3.

In Tabelle 5 sind die entsprechenden Ergebnisse zusammengefaßt.

Tabelle 5

| Abdampftempertur | Wasser | Kongorot (0,5 %) | Rückhaltevermögen |
|---|---|---|---|
| °C | l/m² Tag | l/m² Tag | (%) |
| 50 (mit TiO₂) | 50 000 | 1 700 | 100 |
| nach T-Be-handlung (6 h, 100 °C) | 50 000 | 1 700 | 100 |
| 50 (ohne TiO₂) | 40 000 | 1 500 | 60 |

**Patentansprüche**

1. Semipermeable Membran, die aus einer mikroporösen Trägerschicht und einer selektiven, asymmetrischen Membranschicht aus einem filmbildenden thermoplastischen Polymeren besteht, wobei die asymmetrische Membranschicht ein fein verteiltes, anorganisches Pigment enthält, dadurch gekennzeichnet, daß die asymmetrische Membranschicht 60-90 Gew.-% eines fein verteilten, anorganischen Pigments und/oder Füllstoffs enthält, dessen spezifische Oberfläche im Bereich von 5-50 m²/g liegt.

2. Semipermeable Membran nach Anspruch 1, dadurch gekennzeichnet, daß der mittlere Teilchendurchmesser der Füllstoffe oder Pigmente im Bereich von 0,05-0,5 µm liegt.

3. Semipermeable Membran nach Anspruch 1 oder 2, dadurch gekennzeichnet, daß als Füllstoffe oder Pigmente TiO₂, Ruß, Eisenoxid, Aluminiumoxid, Bariumsulfat, Zinkoxid oder Zinksulfid verwendet werden.

4. Semipermeable Membran nach Ansprüchen 1-3, dadurch gekennzeichnet, daß als Pigment TiO₂ verwendet wird, das mit Trimethylolpropan behandelt oder mit einem weiteren Pigment oder Füllstoff abgemischt ist.

5. Semipermeable Membran nach den Ansprüchen 1-4, dadurch gekennzeichnet, daß die selektive Membranschicht aus einem aromatischen Polyamid, Polyimid, Polyamidimid, (Co)Polymeren aus aromatischen Heterocyclen, cyclischen Polyharnstoffen und/oder Copolymeren aus Acrylnitril und Acrylsäure, Methacrylsäure, Vinylsulfonat, Allylsulfonat oder Disulfimidgruppen enthaltenden Comonomeren, Polysulfonen, cyclischen Polyharnstoffen hergestellt worden ist.

6. Semipermeable Membran nach Ansprüchen 1-5, dadurch gekennzeichnet, daß die filmbildenden thermoplastischen Polymeren einen Erweichungspunkt von mindestens 150 °C haben.

7. Semipermeable Membran nach Ansprüchen 1-6, dadurch gekennzeichnet, daß die Trägerschicht aus einem Vlies oder Papier aus Polyethylen, Polypropylen, Polyester oder Polyamid besteht.

8. Verwendung der Membran nach Ansprüchen 1-7 zur Reinigung heißer, wäßriger Lösungen durch Umkehrosmose oder Ultrafiltration.

**Claims**

1. Semipermeable membrane which consists of a microporous carrier layer and a selective, asymmetric membrane layer of a film-forming thermoplastic polymer, the asymmetric membrane layer containing a finely divided, inorganic pigment, characterised in that the asymmetric membrane layer contains 60-90 % by weight of a finely divided inorganic pigment and/or filler, the specific surface area of which is in the range 5-50 m²/g.

2. Semipermeable membrane according to Claim 1, characterised in that the average particle diameter of the fillers or pigments is in the range 0.05-0.5 $\mu$m.

3. Semipermeable membrane according to Claim 1 or 2, characterised in that $TiO_2$, carbon black, iron oxide, aluminium oxide, barium sulphate, zinc oxide or zinc sulphide are used as the fillers or pigments.

4. Semipermeable membrane according to Claims 1-3, characterised in that $TiO_2$ which has been treated with trimethylolpropane or mixed with a further pigment or filler is used as the pigment.

5. Semipermeable membrane according to Claims 1-4, characterised in that the selective membrane layer has been produced from an aromatic polyamide, polyimide or polyamide imide, (co)polymers of aromatic heterocycles, cyclic polyureas and/or copolymers of acrylonitrile and acrylic acid, methacrylic acid, vinyl sulphonate, allyl sulphonate or comonomers containing disulphimide groups, polysulphones, or cyclic polyureas.

6. Semipermeable membrane according to Claims 1-5, characterised in that the film-forming thermoplastic polymers have a softening point of at least 150 ºC.

7. Semipermeable membrane according to Claims 1-6, characterised in that the carrier layer consists of a web or paper of polyethylene, polypropylene, polyester or polyamide.

8. Use of the membrane according to Claims 1-7 for purifying hot aqueous solutions by reverse osmosis or ultrafiltration.

## Revendications

1. Membrane semi-perméable, qui est constituée d'une couche microporeuse de support et d'une couche sélective asymétrique formant membrane en un polymère thermo-plastique filmogène, la couche asymétrique formant membrane contenant un pigment inorganique finement réparti, caractérisée en ce que la couche asymétrique formant membrane contient 60 à 90 % en poids d'un pigment inorganique et/ou d'une charge finement dispersés dont la surface spécifique se situe dans l'intervalle de 5 à 50 m²/g.

2. Membrane semi-perméable suivant la revendication 1, caractérisée en ce que le diamètre moyen des particules des charges ou des pigments se situent dans l'intervalle de 0,05 à 0,5 $\mu$m.

3. Membrane semi-perméable suivant la revendication 1 ou 2, caractérisée en ce qu'on utilise comme charges ou pigments $TiO_2$, le noir de fumée, l'oxyde de fer, l'oxyde d'aluminium, le sulfate de baryum, l'oxyde de zinc ou le sulfure de zinc.

4. Membrane semi-perméable suivant les revendications 1 à 3, caractérisée en ce qu'on utilise comme pigments du $TiO_2$ qui est traité au triméthylolpropane ou qui est mélangé avec un autre pigment ou une autre charge.

5. Membrane semi-perméable suivant les revendications 1 à 4, caractérisée en ce que la couche sélective formant membrane a été produite à partir d'un polyamide aromatique, d'un polymide, d'un polyamide-imide, de (Co)polymères d'hétérocycles aromatiques, de polyurées cycliques et/ou de copolymères d'acrylonitrile et d'acide acrylique, d'acide méthacrylique, de sulfonate de vinyle, de sulfonate d'allyle ou de comonomères comprenant des groupes disulfimide, de polysulfones, de polyurées cycliques.

6. Membrane semi-perméable suivant les revendications 1 à 5, caractérisée en ce que les polymères thermo-plastiques filmogènes ont un point de ramollissement d'au moins 150 ºC.

7. Membrane semi-perméable suivant les revendications 1 à 6, caractérisée en ce que la couche de support est formée d'une nappe ou d'un papier en polyéthylène, polypropylène, polyester ou polyamide.

8. Utilisation de la membrane suivant les revendications 1 à 7 pour la purification de solutions aqueuses chaudes par osmose inverse ou par ultrafiltration.